# EUROPEAN PATENT SPECIFICATION

(11) **EP 4 339 727 B1**
(45) Date of publication and mention of the grant of the patent: **31.12.2025**
(21) Application number: 23188289.5
(22) Date of filing: 28.07.2023
(51) Int. Cl.: G05D 1/00

(54) **NAVIGATION ALIGNMENT SYSTEMS AND METHODS FOR A MATERIAL HANDLING VEHICLE**
NAVIGATIONSAUSRICHTUNGSSYSTEME UND -VERFAHREN FÜR EIN MATERIALHANDHABUNGSFAHRZEUG
SYSTÈMES ET PROCÉDÉS D'ALIGNEMENT DE NAVIGATION POUR UN VÉHICULE DE MANIPULATION DE MATÉRIAU

(30) Priority: 29.07.2022 US 202263393718 P
(43) Date of publication of application: 20.03.2024
(73) Proprietor: The Raymond Corporation, Greene, New York 13778 (US)
(72) Inventor: YAHNER, Joseph T., Chenango Forks, NY 13746 (US)
(74) Representative: Zacco Sweden AB

(56) References cited:
- US-A1- 2022 144 564

## Description

### CROSS-REFERENCES TO RELATED APPLICATIONS

This application claims the benefit of U.S. Provisional Patent Application No. 63/393,718, filed July 29, 2022.

### BACKGROUND

Material handling vehicles, MHVs, have been developed to transport goods loaded onto generally standardized transport platforms. For example, forklifts are often used to lift goods loaded onto a pallet. In some instances, a MHV may maneuver such goods into and out of a semi-trailer, or other trailers used for transportation of goods, for further transport.

In some examples, a MHV may be able to navigate autonomously, such as by autonomously lifting goods loaded onto the pallet and maneuvering such goods into and out of the semi-trailer. A MHV may do this with the implementation of autonomous navigation sensors coupled to or proximate the MHV. Many autonomous navigation sensors require image processing, wireless communication, and/or obstacle detection to accurately navigate autonomously.

US2022144564 disclose an autonomous dock station system having an automated material lift truck.

### BRIEF SUMMARY

The present disclosure relates generally to navigation alignment systems and methods. More specifically, the present disclosure relates to navigation alignment systems and methods for assisting in the alignment and/or navigation of a MHV as the MHV is navigating relative to a space or a navigation area, such as a trailer (e.g., a trailer used for transportation of goods) and/or a trailer bay (e.g., a dock in a warehouse). This can occur when a MHV is attempting to enter, maneuver within, and/or exit an enclosed space, e.g., the trailer, for example, or other open or enclosed spaces. Other areas for use of the navigation alignment system can include, without limitation, railroad cars, freight elevators, staging areas, storage rooms, etc. A MHV, for example, may be entering the trailer through a trailer bay of the trailer. The trailer bay may include an opening that allows the MHV to enter and/or exit the trailer.

Arranging a navigation alignment system, such as a navigation device arranged in an arch configuration configured to fully or partially extend over and/or otherwise fully or partially outline an over-the-road (OTR) trailer bay in a warehouse may aid in autonomous navigation into and out of the trailer. The navigation alignment system can aid in automated loading and unloading of OTR trailers (e.g., trucks), enabling switching between various sensor types etc. and maximizing available infrastructure.

In one aspect, the present disclosure provides a navigation alignment system to assist in the navigation of a material handling vehicle, MHV, as the MHV is navigating relative to a navigation area. The navigation alignment system comprises a housing; a navigation controller coupled to the housing, the navigation controller to wirelessly communicate with the MHV by directional Wi-Fi; a lighting system coupled to the housing, the lighting system including at least one directable light to provide lighting to at least a portion of the navigation area; at least one reflector coupled to the housing, to provide a reflective surface for the MHV to detect and/or align relative to; a communication system coupled to the housing, including at least one antenna, the communication system to provide the directional Wi-Fi to at least a portion of the navigation area via the at least one antenna; and a set of rollers coupled to the housing for maneuvering the housing, the set of rollers to allow navigation of the housing, wherein the navigation alignment system includes at least one autonomous navigation sensor to allow the housing to navigate autonomously in relation to, into, out of, and/or within the navigation area.

In some cases, the navigation controller is wirelessly coupled to the navigation alignment system.

In various embodiments, the housing is adjustable in any of height, width, or depth so as to achieve different shapes and sizes. In some cases, the housing includes a first side portion, a second side portion, and a top portion that physically couples the first side portion to the second side portion.

In various instances, the navigation controller communicates directly and/or indirectly with any of at least one of the navigation alignment system, the material handling vehicle, a trailer, a trailer bay, a warehouse management system, and/or any other device. The navigation controller can cause the navigation alignment system or the housing of the navigation alignment system to autonomously maneuver into an alignment position with the trailer, turn on the lighting system, and turn on the communication system.

Additionally, in some cases, in response to a notification that the material handling vehicle is lost, the navigation alignment system is further configured to at least one of direct the at least one directable light towards the material handling vehicle, increase a brightness of the at least one directable light, or move to a new position.

In some embodiments, the navigation alignment system is a component of a dock bay door.

According to the invention, the navigation alignment system includes at least one autonomous navigation sensor to navigate autonomously in proximity to, into, out of, and/or within a navigation area.

According to the invention, the material handling vehicle is configured to navigate a path upon achieving an alignment with the navigation alignment system.

In another aspect, the present disclosure provides a method for assisting the navigation of a material handling vehicle, MHV in a navigation area. The method comprises determining a location of a navigation area; providing, based on the location of the navigation area, position coordinates to cause a navigation alignment system to move to the navigation area; instructing the navigation alignment system to provide lighting and a directional wireless signal to at least a portion of the navigation area; aligning the MHV to the navigation alignment system prior to the MHV navigating in the navigation area; and navigating a path upon achieving an alignment with the navigation alignment system.

In some cases, the navigation area is an enclosed space.

According to the invention, the method further includes aligning the material handling vehicle to the navigation alignment system prior to the material handling vehicle navigating in the navigation area. The method can further include the material handling vehicle navigating a path upon achieving an alignment with the navigation alignment system.

The method can additionally include detecting the material handling vehicle as the material handling vehicle passes the navigation alignment system and coordinating a path of the material handling vehicle based on a detection of the material handling vehicle as the material handling vehicle passes the navigation alignment system.

In yet another aspect, the present disclosure provides a navigation alignment system to assist in the navigation of a material handling vehicle. The navigation alignment system comprises a housing; a navigation controller coupled to the housing, the navigation controller to wirelessly communicate with the material handling vehicle; and a communication system including at least one antenna coupled to the housing, the communication system to provide directional Wi-Fi via the at least one antenna.

According to the invention, the at least one antenna is configured to provide directional Wi-Fi to a navigation area and wherein the material handling vehicle is configured to connect to the directional Wi-Fi as the material handling vehicle navigates within the navigation area.

In some embodiments, the system further includes comprising at least one imaging sensor. The navigation controller is configured to receive data from the at least one imaging sensor and align the housing of the navigation alignment system to a navigation area based on the data received from the at least one imaging sensor. The navigation area is a trailer, and the housing of the navigation system is aligned with a perimeter of the trailer based on the data received from the at least one imaging sensor.

The system can further include at least one presence detection sensor. The navigation controller is configured to receive data from the at least one presence detection sensor and determine at least one of an approach of the material handling vehicle to a navigation area or an exit of the material handling vehicle from the navigation area.

The foregoing and other aspects and advantages of the disclosure will appear from the following description. In the description, reference is made to the accompanying drawings which form a part hereof, and in which there is shown by way of illustration a preferred configuration of the disclosure. Such configuration does not necessarily represent the full scope of the disclosure, however, and reference is made therefore to the claims and herein for interpreting the scope of the disclosure.

### BRIEF DESCRIPTION OF DRAWINGS

The invention will be better understood and features, aspects, and advantages other than those set forth above will become apparent when consideration is given to the following detailed description thereof. Such detailed description makes reference to the following drawings.
Fig. 1 is a block diagram of an example system architecture including an example material handling vehicle (MHV), a trailer, and a navigation alignment system, according to some aspects of the present disclosure.
Fig. 2 is a top view of an example MHV preparing to access an inside compartment of an example trailer of Fig. 1, according to some aspects of the present disclosure.
Fig. 3 is a top view of the MHV of Fig. 2 accessing the trailer with assistance from an example navigation alignment system, according to some aspects of the present disclosure.
Fig. 4 is a front view of an example navigation alignment system of Fig. 2, according to some aspects of the present disclosure.
Fig. 5 is a side view of a trailer, trailer bay, and navigation alignment system, according to some aspects of the present disclosure.
Fig. 6 is a block diagram illustrating example components of an example navigation alignment system and navigation controller, in accordance with some aspects of the present disclosure.
Fig. 7 is a flowchart illustrating an example process for controlling the navigation alignment system of Fig. 1, according to some aspects of the present disclosure.
Fig. 8 is a top cross-section of an example navigation alignment system with a lighting system and/or a wireless communication signal directed into a trailer, according to some aspects of the present disclosure.
Fig. 9 is a top view of the MHV navigating within the inside compartment of a trailer with assistance from a navigation alignment system inside the trailer, according to some aspects of the present disclosure.

### DETAILED DESCRIPTION

Before any aspects of the invention are explained in detail, it is to be understood that the invention is not limited in its application to the details of construction and the arrangement of components set forth in the following description or illustrated in the following drawings. The invention is capable of other aspects and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

It is also to be appreciated that material handling vehicles,MHVs, are designed in a variety of classes and configurations to perform a variety of tasks. It will be apparent to those of skill in the art that the present disclosure is not limited to any specific MHV, and can also be provided with various other types of MHV classes and configurations, including for example, lift trucks, forklift trucks, reach trucks, SWING REACH^{®} vehicles, turret trucks, side loader trucks, counterbalanced lift trucks, pallet stacker trucks, order pickers, transtackers, and man-up trucks, and can be commonly found in warehouses, factories, shipping yards, and, generally, wherever pallets, large packages, or loads of goods can be required to be transported from place to place. The various systems and methods disclosed herein are suitable for any of operator controlled, pedestrian controlled, remotely controlled, and autonomously controlled material handling vehicles.

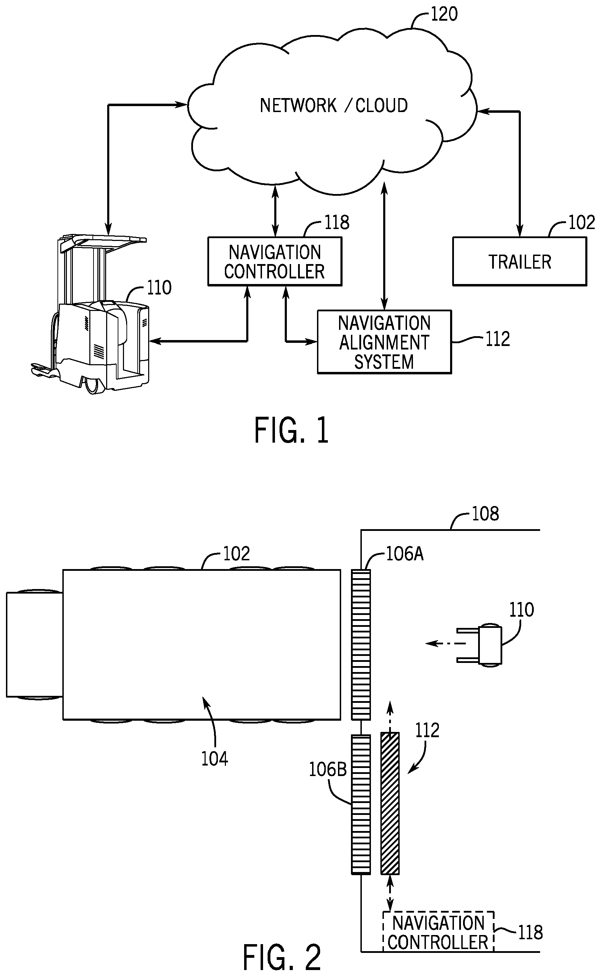

Fig. 1 illustrates a block diagram of an example system architecture including an example MHV 110, a trailer 102 (e.g., an over-the-road (OTR) trailer, etc.), and a navigation alignment system 112, according to some aspects of the present disclosure. In addition, the system architecture of Fig. 1 includes a navigation controller 118. The navigation controller 118 communicates with at least one MHV, such as MHV 110. In addition, or alternatively, the navigation controller 118 may be configured to communicate or otherwise interface with the navigation alignment system 112 and/or the trailer 102. In an example, the navigation controller 118 may execute instructions stored in memory that cause the navigation controller 118 to initiate an orientation routine, for example, configured to orient the navigation alignment system 112 relative to the trailer 102 upon execution of the instructions.

Whether integrated with, or separate from another computing device (e.g., the navigation alignment system 112), the navigation controller 118 corresponds to a processing circuitry that may be configured to execute operating routine(s) stored in a memory. The navigation controller 118 can include any combination of software and/or processing circuitry suitable for controlling various components of the navigation alignment system 112 described herein including without limitation processors, microcontrollers, application-specific integrated circuits, programmable gate arrays, and any other digital and/or analog components, as well as combinations of the foregoing, along with inputs and outputs for processing control signals, drive signals, power signals, sensor signals, and so forth. All such computing devices and environments are intended to fall within the meaning of the term "controller" or "processing circuitry" as used herein unless a different meaning is explicitly provided or otherwise clear from the context.

In some examples, the navigation controller 118 may communicate with the navigation alignment system 112 over a communication network 120, such as a cloud network, a local area network (LAN), a personal area network (PAN), or another computing network including at least two computing devices in wired and/or wireless communication with one another. In an example, the navigation controller 118 may directly and/or indirectly communicate with any of the navigation alignment system 112, the MHV 110, the trailer 102, a warehouse management system, and/or any other device, such as a trailer bay (e.g., the trailer bay 106A of Fig. 2). In such examples, the navigation controller 118 may control at least one operation of the MHV 110, a dock bay door, and/or at least one operation of the navigation alignment system 112, for example, such as by causing the navigation alignment system 112 to autonomously maneuver into an alignment position with the trailer 102, control (e.g., turn on/off, adjust) a lighting system of the navigation alignment system 112, control (e.g., turn on/off, adjust) a communication system of the navigation alignment system 112, and so forth.

In some examples, the navigation controller 118 may be coupled to or otherwise integrated into the navigation alignment system 112. In another example, the navigation controller 118 may be arranged externally from the navigation alignment system 112, such as by being arranged separate from the navigation alignment system 112 (e.g., within the MHV 110, within the dock bay door, etc.).

In an example, the navigation alignment system 112 may be configured to implement operations corresponding to the navigation controller 118 with at least one processor of a control unit of the navigation alignment system 112. In another example, the navigation controller 118 may be separate from the navigation alignment system 112, such as a remote-control system configured to control any of the navigation alignment system 112, the MHV 110, and/or the trailer 102, using over-the-air (OTA) signaling, wired signaling, or in some instances, both wired and wireless communication depending on the circumstances or nature of the task involved.

With reference now to Fig. 2, a top view is shown of an example MHV 110 preparing to access an inside compartment 104 of an example trailer 102, according to some aspects of the present disclosure. In some examples, the MHV 110 may be attempting to navigate into, out of, and/or within the trailer 102 without additional components to aid in navigation. In an example, a trailer 102 may approach a trailer bay 106A/106B (e.g., a dock bay door, or the like), such as by operating the trailer 102 in reverse to bring a compartment 104 of the trailer 102 sufficiently close to a trailer bay 106A as shown in the illustrative example of Fig. 2. In an example, the trailer 102 may be configured to achieve a target distance from the trailer bay 106A to effectively allow a MHV 110 to maneuver from a first structure 108 (e.g., a warehouse) into the inside compartment 104 of the trailer 102 and/or exit the trailer 102 into the first structure 108 in instances where the MHV 110 is already within the trailer 102.

In some examples, a MHV 110 may include a set of autonomous navigation sensors (not explicitly shown in Fig. 2). Many autonomous navigation sensors, such as those that may be coupled to a MHV 110, may utilize image processing, wireless communication, and/or obstacle detection to navigate autonomously into, out of, and/or within a trailer 102.

In some examples, a MHV 110 may encounter difficulties with carrying out such autonomous navigation inside a trailer 102 due to poor lighting, poor wireless communication, and/or the layout within the trailer 102 being unknown to the MHV 110, such as where there is no standard arrangement of obstacles (e.g., other MHVs 110, material for a MHV 110 to handle, etc.) within the trailer 102.

In some examples, the trailer 102 may not include sufficient lighting within the inside compartment 104 of the trailer 102. In such examples, the inside compartment 104 of the trailer 102 may be dark due to a lack of lighting used to illuminate the inside compartment 104 of the trailer 102. In such examples, an inside trailer compartment 104 that has insufficient lighting may cause a MHV 110 difficulty where the MHV 110 is configured to employ vision-guided navigation to maneuver into the compartment 104 of the trailer 102.

In an example, poor communication network connectivity within a trailer 102 may result in difficulty with the autonomous operation of a MHV 110. In an example, a Wi-Fi connection may weaken due to the walls of the trailer 102. A Wi-Fi connection may weaken when the MHV 110 is within the trailer 102, in the process of entering the trailer 102, and so forth. In such instances, the MHV 110 may utilize a different mode of operation, such as a manual operating mode, in instances where the autonomous operation of a MHV 110 utilizes information received from a communication network when performing autonomous operations in or around a trailer 102 and/or trailer bay 106A.

In another example, aligning a MHV 110 to enter a trailer 102 may be hindered in instances where the navigation system employing the autonomous operation of the vehicle (e.g., the navigation controller 118) lacks sufficient information regarding the alignment of the trailer 102 relative to the trailer bay 106A.

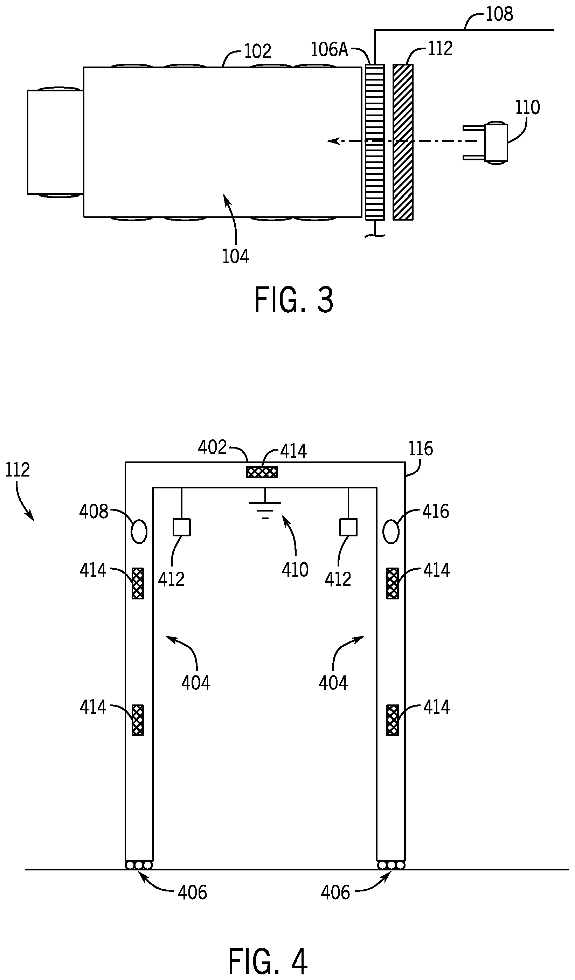

Accordingly, the present disclosure is related to systems, methods, and techniques for providing a navigation alignment system 112 that can enable navigation of a MHV 110 in a navigation area. Fig. 3 is a top view of a MHV, such as the MHV 110 described with reference to Fig. 2. In some examples, the MHV 110 may enter the inside compartment 104 of a trailer 102. In an example, the navigation alignment system 112 may maneuver into a position that effectively aligns the navigation alignment system 112 with the trailer 102, such as with an opening into the trailer 102. The navigation alignment system 112 may autonomously maneuver to a desired position and may also be manually maneuvered and/or remotely maneuvered and may communicate with a warehouse management system to acquire directions and/or coordinates, and to report current position, all as part of a warehouse-wide autonomous system. Accordingly, the MHV 110 may enter the trailer 102 with assistance from the navigation alignment system 112. In an example, the MHV 110 may navigate into the trailer 102 by passing through the navigation alignment system 112 when the navigation alignment system 112 is in alignment with the trailer 102. In such examples, the navigation alignment system 112 may enable autonomous navigation of the MHV 110 into the trailer 102.

In some examples, the navigation alignment system 112 may be arranged over and/or partially or completely around a trailer bay 106A. In addition, or alternatively, the navigation alignment system 112 may provide an alignment structure for the MHV 110 to sense prior to entering the trailer 102. In some cases, the navigation alignment system 112 may be a component of the of a dock or trailer bay 106A and/or a component of a MHV 110.

In such examples, the MHV 110 may enter the trailer 102 upon maneuvering into a position that is in alignment with the navigation alignment system 112. In some examples, the navigation alignment system 112 may navigate through a given environment (e.g., a warehouse, a construction zone, etc.) to align with a trailer 102. In an example, the navigation alignment system 112 may do so upon determining that a trailer 102 and/or MHV 110 is approaching a trailer bay 106A or multiple trailer bays 106A and 106B simultaneously (see Fig. 2) depending on the size and spacing of the dock bay doors.

In such examples, the navigation alignment system 112 may navigate into a position relative to the trailer 102 that provides an accessible entryway for a MHV 110 to enter the trailer 102 through the navigation alignment system 112. In such examples, the MHV 110 may utilize autonomous controls processes to achieve an orientation with the navigation alignment system 112 that allows the MHV 110 to maneuver in and/or out of a trailer 102. In other words, based on a position or orientation of the navigation alignment system 112, the MHV 110 may adjust its own position and orientation relative to the position or orientation of the navigation alignment system 112 to more easily maneuver in and/or out of a trailer 102.

Example advantages of the various techniques of this disclosure include the ability to communicate alignment and navigation instructions between a trailer 102 and/or a trailer bay 106A (e.g., a dock bay door) to an approaching MHV 110. In another example, a MHV 110 may communicate with any such computing devices, including the navigation alignment system 112, over a wireless communication network or otherwise via wireless signaling. In an example, the MHV 110 may receive navigation instructions from the navigation alignment system 112 indicating that the navigation alignment system 112 is in a target position such that the MHV 110 may align itself with the navigation alignment system 112 prior to entering or exiting a trailer 102.

In addition, or alternatively, the navigation alignment system 112 may advantageously enable a wide variety of various configurations of MHVs 110. Accordingly, the navigation alignment system 112 may advantageously allow autonomous operation of a wide variety of variously shaped MHVs 110. In an example, a MHV 110 of a particular shape may be able to maneuver into a trailer 102 and/or within an inside compartment 104 of the trailer 102 with the navigation alignment system 112 providing navigation assistance along a path of the MHV 110.

Additionally or alternatively, the navigation alignment system 112 may advantageously allow autonomous operation of a plurality of MHVs 110. In a non-limiting example, the navigation alignment system 112 might set up a queue and determine a first MHV to maneuver into a trailer 102 and/or within an inside compartment 104 of the trailer 102, a next MHV to maneuver into a trailer 102 and/or within an inside compartment 104 of the trailer 102, etc. until the trailer 102 is unloaded or all items associated with first structure 108 are unloaded. The navigation alignment system 112 might provide navigation assistance along a path of each of the MHVs in the queue and provide instructions to each MHV to ensure a first MHV remains spaced from a next MHV.

Such MHVs 110 may be configured to navigate a path upon achieving an alignment with the navigation alignment system 112. In an example, a MHV 110 may determine a path to navigate (autonomously or otherwise) into the trailer 102. The MHV 110, or if located separately, the navigation controller 118, may calculate the path, or at least a portion thereof, using spatial coordinates to allow the MHV 110 to use the navigation alignment system 112 when entering or exiting a trailer 102. In such instances, the spatial coordinates may employ relative position coordinates for communicating with the MHV 110. In an example, the navigation controller 118 may define the position coordinates relative to a position of the navigation alignment system 112 so as to utilize the position of the navigation alignment system 112 as a frame of reference for defining the path.

In an example, a pathway definition for the path may include instructions for the MHV 110 to center itself along an axis of the navigation alignment system 112, and to advance toward the navigation alignment system 112 for a particular amount of time and/or for a particular distance and execute a particular navigation maneuver once the MHV 110 detects that the MHV 110 has navigated through and passed the navigation alignment system 112. In some examples, the MHV 110 may utilize lighting within the trailer 102, such as what the navigation alignment system 112 may provide in various examples, to assist in navigating into, out of, or within the trailer 102. Similarly, the MHV 110 may utilize a directional wireless communication signal (e.g., directional Wi-Fi), such as that which the navigation alignment system 112 may provide in various examples, to assist in navigating into, out of, or within the trailer 102. Other wireless communication protocols may be used, such as, but not limited to Bluetooth^{®}, Zigbee^{®}, and near field communications.

In another example, the navigation alignment system 112 of the present disclosure may additionally, or alternatively, assist in automated loading and unloading from a trailer 102, enabling switching between various sensor types (on the autonomous MHVs 110) and maximizing available resources across various material handling vehicle (MHV) environments (e.g., a warehouse, the inside of a trailer 102, a construction zone, etc.).

With reference now to Fig. 4, a front view is shown of an example navigation alignment system 112, according to some aspects of the present disclosure. In some examples, the navigation alignment system 112 may include a housing 116 that can, in some examples, resemble the shape of an arch or tunnel. In an example, the navigation alignment system 112 may generally outline a trailer bay 106A (e.g., a dock bay door), although not required. In an example, the navigation alignment system 112 may outline the trailer bay 106A along the top and side portions of the trailer bay 106A. In such examples, the navigation alignment system 112 may outline the trailer bay 106A without necessarily aligning with the bottom portion of the trailer bay 106A, which may in turn result in the navigation alignment system 112 taking on the form of an arch-like structure including a first side portion, a second side portion, and a top portion that physically couples the first side portion to the second side portion, in such examples.

While the navigation alignment system 112 is described in some instances, for example, as including an arch the size of a trailer bay 106A, the techniques of this disclosure are not so limited, and it will be understood that the navigation alignment system 112 can have many different shapes and sizes. In an example, the navigation alignment system 112 may be adjustable in any of height, width, or depth so as to achieve different shapes and sizes. In an example, a particular MHV 110 and/or a trailer bay 106A may have different shapes or sizes, and the particular navigation alignment system 112 may, thus, be a fully enclosed shape, rather than an arch-like structure, for example, that can assist the MHV 110 with various maneuvering tasks. In other cases, the navigation alignment system 112 may be sized and shaped to advantageously allow a wide variety of variously shaped MHVs 110 to pass underneath it. Alternatively, the navigation alignment system 112 may be sized and shaped to advantageously allow a particular-shaped MHV 110 to pass underneath it.

According with the invention, the navigation alignment system 112 include a lighting system including at least one light 412, at least one reflector 414, a communication system including at least one antenna 410 (e.g., transceivers) for providing directional Wi-Fi, or other wireless communication protocols, and a set of rollers 406.

In some examples, the lighting system (e.g., may have two or more lights 412 spaced apart from one another) may be mounted to an inner periphery of the navigation alignment system 112. In another example, the lighting system may be mounted to the navigation alignment system 112 at a location where light from the lighting system may be directed into a trailer 102. In an example, the navigation alignment system 112 may include directable and/or remotely controllable lights 412 that can be directed to shine into the trailer 102 for a vision system guidance. In this way, for example, the inside compartment 104 of the trailer 102 may be illuminated and enable vision system guidance within the trailer 102.

In some examples, the at least one reflector 414 (e.g., five reflectors 414 shown in Fig. 4) may be arranged on the front 404, back, sides and/or top 402 of the navigation alignment system 112. In some examples, the reflectors 414 may provide a reflective surface for sensors (e.g., sensors on the MHV 110) to detect and/or align relative to. In some examples, the navigation alignment system 112 may include reflectors 414 mounted on the front 404, back, and/or top 402 of the navigation alignment system 112 that an automated guided vehicle (AGV) could use for laser triangulation.

The navigation alignment system 112 includes at least one antenna 410. The antenna 410 produces a directional wireless signal , that is directional Wi-Fi. In such examples, the navigation alignment system 112 may include directional Wi-Fi access points pointed into the trailer 102. In an example, the navigation alignment system 112 may cause the antennas 410 to move (e.g., rotate, translate, etc.) and to direct the directional Wi-Fi signal into the trailer 102 to provide wireless access points inside the trailer 102. In such examples, providing wireless access points via the antennas 410 inside the trailer 102 may maintain the ability of an autonomous MHV 110 to navigate and operate within the inside compartment 104 of the trailer 102. Additionally, providing wireless access points via the antennas 410 inside the trailer 102 may allow for the navigation controller 118 to communicate and provide instructions (e.g., a map, etc.) to the MHV 110 within the inside compartment 104 of the trailer 102.

In some examples, the navigation controller 118 may maneuver a set of rollers 406. In some examples, the set of rollers 406 may be coupled to the navigation alignment system 112 in various different arrangements. The set of rollers 406 may be arranged on a bottom of the navigation alignment system 112 and may engage the floor on which a MHV 110 travels (e.g., a dock floor). In some examples, the set of rollers 406 may include at least one wheel(s), track(s), and/or other such structures.

In an example, the navigation controller 118 may control the set of rollers 406 to maneuver the navigation alignment system 112. In an example, the navigation controller 118 may cause an adjustment to the rollers 406 when the set of rollers 406 are coupled to the navigation alignment system 112. As such, the set of rollers 406 may enable the navigation alignment system 112 to automatically travel through a given environment. In some examples, the navigation alignment system 112 can be manually moved from one location to another.

In some cases, the navigation alignment system 112 might have one or more cameras 408 or other imaging sensors. The one or more cameras 408 might be used to help position the navigation alignment system 112 relative to the trailer 102, the trailer bay, and/or the MHV 110.

In various embodiments, the navigation alignment system 112 might further have one or more presence detection sensors 416 (e.g., cameras, object detection sensors, or the like). The one or more presence detection sensors 416 may be used to detect the approach or exit of MHV 110 to or from the trailer 102 or to detect when the MHV 110 is passing underneath or next to the navigation alignment system 112. The one or more presence detection sensors 416 might be used by the navigation alignment system 112 and/or navigation controller 118 to coordinate one or more MHVs (e.g., coordinate a path of an MHV 110, coordinate a path of the MHV 110 based on a determination of whether the MHV 110 is entering or exiting the trailer 102, coordinate two or more MHVs in a queue such that only one MHV is in the trailer 102 at a given time or such that only one MHV passes underneath the navigation alignment system 112 at a given time, etc.) and/or to determine a position or orientation of one or more MHVs relative to the navigation alignment system.

In some instances, the navigation alignment system 112 might have one or more bar code scanners (not shown in Fig. 4) or image sensors (e.g., cameras 408) to scan or image one or more boxes or one or more products that an MHV 110 is carrying as it passes through the navigation alignment system 112. In this way, the one or more boxes or one or more products can be automatically tracked, counted, checked, or verified as they enter and exit a space (e.g., trailer 102 or a warehouse). The navigation alignment system 112 might communicate with a warehouse management system (WMS) to track, count, check, or verify the one or more boxes or products as they enter or exit a warehouse.

It should be understood that the arrangement of the lights 412, reflectors 414, directional Wi-Fi antennas 410, rollers 406, cameras 408, presence detection sensors 416, bar code scanners, etc. may be modified from the illustrated configurations. In an example, the number of lights 412, the number of reflectors 414, the number of antennas 410, and/or the number of rollers 406 may be more or less than the amount shown.

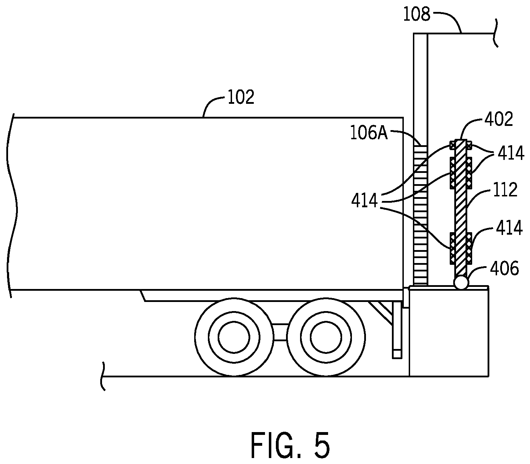

Fig. 5 is a side view of a trailer 102, trailer bay 106A, and navigation alignment system 112, according to some aspects of the present disclosure. As shown, a trailer 102 may approach a trailer bay 106A, for example, by reversing or backing up to the trailer bay 106A. In such instances, the alignment of the trailer 102 relative to the trailer bay 106 (e.g., a particular dock bay door, a set of multiple dock bay doors, etc.) may depend on a number of factors, such as the capabilities of the operator of the trailer 102. As an example, a novice driver may achieve a lesser degree of alignment with the trailer bay 106A relative to an experienced driver who, in turn, may achieve a lesser degree of alignment relative to an autonomous operator.

In such examples, a warehouse management system (WMS) and/or the navigation alignment system 112 may determine a presence of the trailer 102 at the trailer bay 106A. In some embodiments, the WMS can autonomously guide the navigation alignment system 112 to the trailer bay 106A. In other embodiments, the navigation alignment system 112 may autonomously maneuver into a position such that the navigation alignment system 112 is in alignment with the trailer 102. In an example, the navigation alignment system 112 may maneuver into position such that the navigation alignment system 112 is centered with an opening into the trailer 102. In such examples, the navigation alignment system 112 may provide electrical and/or mechanical power to the set of rollers 406 in order to turn and drive the navigation alignment system 112 into alignment with the trailer 102.

In some examples, the navigation alignment system 112 may utilize imaging techniques and sensors (e.g., cameras, etc.) to measure the opening into the trailer 102, such as to determine a perimeter of the trailer opening. In such examples, the navigation alignment system 112 may utilize such measurements to maneuver into a position that is centered or otherwise aligned with the trailer 102. As shown, the navigation alignment system 112 may include reflectors 414 on a front face of the navigation alignment system 112 and on a back face of the navigation alignment system 112. In some examples, navigation alignment system 112 may only include reflectors 414 on a front face or back face of the navigation alignment system 112. It should be understood that, while shown as including reflectors 414 in a particular configuration, the techniques of this disclosure are not so limited. In some examples, the navigation alignment system 112 may not have reflectors for reflecting light or other electromagnetic waves but may include built-in lights to make itself visible to other vehicles, such as the MHV 110, in addition to, or in lieu of the set of lights 412 used to illuminate the inside of the trailer 102. In some cases, the navigation alignment system 112 may have reflectors as well as built-in lights.

In some cases, the imaging techniques and sensors may further be used to track or observe an MHV 110 as it maneuvers within the inside compartment 104 of the trailer 102 and provide feedback to the navigation controller 118 regarding a position and orientation of the MHV 110 as it maneuvers within the inside compartment 104 of the trailer 102. Based on a determination of a position or orientation of the MHV 110 within the trailer 102, the navigation alignment system 112 and/or navigation controller 118 might provide instructions to the MHV 110 to maneuver within the trailer 102. In some cases, these instructions might be sent in response to a notification from the MHV 110 that it is lost (e.g., when one or more sensors are not working within inside compartment 104 due to poor lighting or other issue) within the trailer 102. The MHV 110 might send or transmit an indication that the MHV 110 is lost to the navigation controller 118.

Alternatively, in response to a notification that the MHV is lost, the navigation controller 118 might determine a position of the MHV based on the imaging sensors and direct the lights 412 towards a position of the MHV in the trailer 102 to light up a pathway or a navigation area for the MHV 110. In some cases, in response to a notification that the MHV is lost, the navigation alignment system 112 and/or navigation controller 118 might increase the brightness of the lights 412. In other cases, in response to a notification that the MHV is lost, the navigation controller 118 might cause the navigation alignment system 112 to maneuver to a better position (e.g., move into the trailer 102, move closer to the trailer 102, maneuver to the navigation area, etc.) to direct light into the trailer 102. In various instances, the navigation alignment system 112 and/or navigation controller 118 might determine that the MHV 110 has lost its connectivity to the Wi-Fi and use the one or more imaging sensors to direct the antenna 410 toward the MHV in the trailer 102 and provide directional Wi-Fi to the MHV in the trailer 102.

**In** various embodiments, the imaging techniques and sensors may further be used to map a path for the MHV to follow and maneuver within the trailer 102. The navigation controller 118 may send a proposed path for the MHV to follow based on the images received using the imaging techniques and sensors. For example, the navigation controller 118 may note one or more navigation areas of interest (e.g., boxes, pallets, locations within trailer 102, etc.) and provide a proposed route to the MHV to reach those areas of interest.

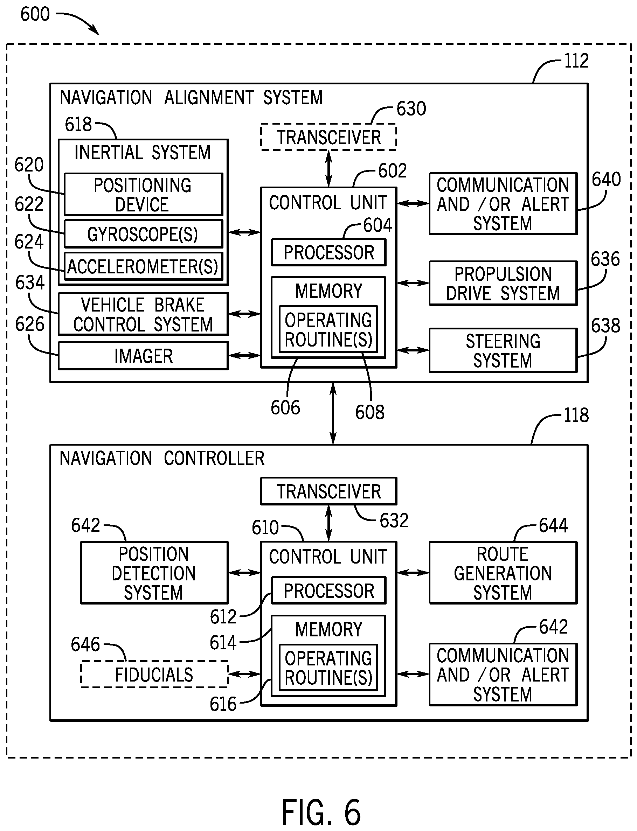

Fig. 6 is a block diagram illustrating example components of an example navigation alignment system 600 including a navigation alignment system 112 and navigation controller 118, in accordance with some aspects of the present disclosure. In some examples, the navigation controller 118 may include a separate detection system that operates outside of the navigation alignment system 112. In another example, the navigation alignment system 112 may include the navigation controller 118, which may be included within the same processing system as the navigation alignment system 112. For example, the control unit 602 of the navigation alignment system 112 and the control unit 610 of the navigation controller 118 may be implemented with the same processing circuitry when those are included as part of the navigation alignment system.

In an example, the navigation alignment system 112 may execute, using a processor 604, instructions or operating routines 608 stored in memory 606 that cause the navigation alignment system 112 to initiate an operation routine, for example, an operation routing configured to orient the navigation alignment system 112 relative to the trailer 102 upon execution of the instructions. The navigation controller 118 may execute, using processor 612, instructions or operating routines 616 stored in memory 614 that cause the navigation controller 118 to initiate an operation routine, for example, configured to orient the navigation alignment system 112 relative to the trailer 102 upon execution of the instructions.

The navigation alignment system might include an inertial system 618 with one or more sensors (e.g., positioning system 620, gyroscope 622, accelerometers, 624, or the like). The navigation alignment system 112 may include a positioning system 620 (e.g., a global positioning system (GPS), or the like), a gyroscope 622, an accelerometer 624, an imager 626, and/or any other practicable device for determining a location and positioning of various obstacles proximate the navigation alignment system 112. The navigation alignment system 112 may be configured to provide information associated with a position and an orientation of the navigation alignment system 112. The gyroscope 622 may include a microelectromechanical system (MEMS) gyroscope or a fiber optic gyroscope as examples. The gyroscope 622 may be configured to provide orientation information to the processor. The positioning system 620 or GPS unit may include a receiver that obtains clock and other signals from GPS satellites and may be configured to provide real-time location information. The navigation alignment system 112 may further include an accelerometer 624 configured to provide motion input data.

In some examples, the navigation alignment system 112 may include at least one obstacle detection sensor 628. In such examples, the navigation alignment system 112 may utilize the obstacle detection sensors 628 to detect misalignment with the trailer 102 relative to the position of the navigation alignment system 112. In such examples, the navigation controller 118 can maneuver the navigation alignment system 112 to align with the trailer 102. In some examples, the navigation controller 118 and/or the WMS may instruct the set of rollers 406 of the navigation alignment system 112 to autonomously maneuver the navigation alignment system 112, for example, relative to the trailer bay 106A and/or the trailer 102.

In some examples, the navigation controller 118 is configured to cause the navigation alignment system 112 to maneuver into a particular position. In an example, the navigation controller 118 may transmit a set of wireless signals to the navigation alignment system 112, the MHV 110, the trailer 102, and/or the trailer bay 106A. In an example, the navigation controller 118 may utilize a transceiver 632 to transmit a wireless control signal to a transceiver 630 of the navigation alignment system 112. The wireless control signal may cause the navigation alignment system 112 to maneuver into a particular position.

In an example, the navigation controller 118 may maneuver the navigation alignment system 112 relative to the trailer bay 106A (e.g., a dock bay door) and/or the trailer 102. In an example, the navigation controller 118 may transmit a command signal configured to cause an adjustment to the MHV's position of a MHV 110 relative to the trailer bay 106A and/or the trailer 102. In some examples, the navigation controller 118 may maneuver the set of rollers 406. In some examples, the MHV 110 may navigate autonomously along a particular route. In such examples, the MHV 110 may employ sensors to determine a location (e.g., spatial coordinates) of the trailer 102.

The control unit 602 of the navigation alignment system 112 may also communicate with a brake control system 634 of the navigation alignment system 112 to receive speed information such as individual wheel speeds of the navigation alignment system 112. Additionally or alternatively, vehicle speed information may be provided to the control unit by a propulsion drive system 636 and/or a vehicle speed sensor, among other conceivable techniques. The propulsion drive system may provide a motive force for moving the navigation alignment system 112 in a designated travel direction at a controlled speed.

In some examples, the control unit 602 of the navigation alignment system 112 may be coupled with a steering system 638 of the navigation alignment system 112 to operate steered wheels of the navigation alignment system 112. The steering system 638 may include a steering wheel and a steering angle sensor. In some embodiments, the steering wheel of the navigation alignment system 112 may be mechanically coupled with the steered wheels of the navigation alignment system 112 such that the steering wheel moves in concert with steered wheels via an internal torque or linkage. In such instances, the steering system may include a torque sensor that senses torque (e.g., gripping and/or turning) on the steering wheel indicative of manual intervention by a manual operator of the navigation alignment system 112.

In some embodiments, the control unit 602 of the navigation alignment system 112 and/or the control unit 610 of the navigation controller 118 may be coupled with a communication and/or alert system 640 of the navigation alignment system 112 and/or with a communication and/or alert system 642 of the navigation controller 118 for notifying various devices or personnel of movement of the navigation alignment system 112, for example. In a non-limiting example, the navigation alignment system 112 can be configured to make one or more noises when it is backing up or when a person is detected near the navigation alignment system 112 when the navigation alignment system 112 is moving. Alternatively, the navigation alignment system 112 and/or navigation controller 118 might be configured to send one or more notifications or alerts to an MHV, a phone, or warehouse management system that the navigation alignment system 112 is moving to a new location.

In some examples, the navigation controller 118 may include a position detection system 644 for detecting a position of the navigation alignment system 112 or MHV 110. The position detection system 644 can analyze or detect one or more fiducials 646 or reference points to detect the position of the navigation alignment system and/or MHV 110. The navigation controller 118 may further include a route generation system 644 to determine a route for the navigation alignment system 112 to align it with a trailer bay 106A and/or a trailer 102 or to generate a route for a MHV 110 to follow through the navigation alignment system 112 to reach a target destination.

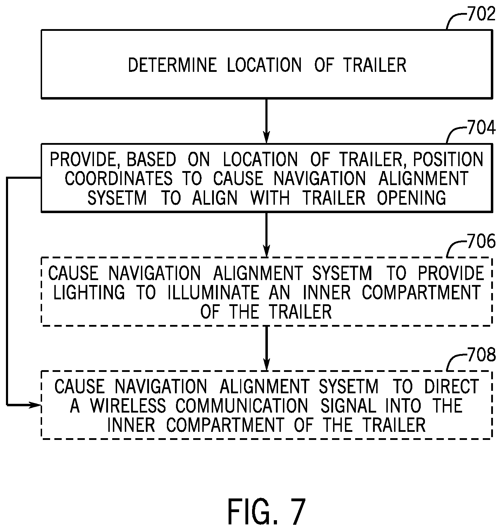

Fig. 7 is a flowchart illustrating an example process for controlling the navigation alignment system 112, according to some aspects of the present disclosure. While the below operations are described with reference to navigation controller 118, it will be understood that the navigation controller 118 may be an operational part of the navigation alignment system 112, and thus, the navigation alignment system 112 may perform the operations outlined below with or without assistance from a separate navigation controller 118, as may be the case in some instances.

At block 702, the navigation controller 118 may be configured to determine a location of a navigation area, and in the described example, the navigation area is the trailer 102. In some examples, the navigation controller 118 may determine when a trailer 102 has been detected. In an example, the navigation controller 118 may detect a trailer 102 moving toward the trailer bay 106A/106B. In an example, the navigation controller 118 may determine an access location of the trailer 102 (e.g., an opening or doorway into an inside compartment 104 of the trailer 102).

At block 704, the navigation controller 118 may communicate with a WMS and may be configured to provide, based on location of the trailer 102, position coordinates to cause navigation alignment system 112 to align with an opening of the trailer bay 106A and/or an opening of the trailer 102. In some examples, the navigation controller 118 may cause the navigation alignment system 112 to engage its rollers 406 to autonomously maneuver the navigation alignment system 112 into alignment with the trailer bay 106A and/or trailer 102. In an example, the navigation alignment system 112 may maneuver relative to the dock bay door to align with the trailer 102.

At block 706 (optional), the navigation controller 118 may be configured to cause the navigation alignment system 112 to provide lighting to illuminate an inside compartment 104 of the trailer 102. In some examples, the navigation alignment system 112 may turn on a set of lights 412 upon determining sufficient alignment with the trailer 102. In some examples, the navigation alignment system 112 may cause at least one light 412 to direct light into the trailer 102 and/or at a particular location within or proximate the trailer 102 and/or trailer bay 106A.

At block 708 (optional), the navigation controller 118 may be configured to cause the navigation alignment system 112 to direct a wireless communication signal into the inner compartment of the trailer. In an example, the navigation alignment system 112 may engage a directional Wi-Fi system to direct a wireless communication signal into an inside compartment 104 of the trailer 102. In such examples, the MHV 110 may communicate over a wireless network 120 via the directional Wi-Fi system to receive position coordinates for sustained autonomous operation within the trailer 102. This is because, for example, the network communication may have otherwise been inoperable inside the trailer 102 due to interference with the inside walls of the trailer 102, for example. Accordingly, the navigation alignment system 112 may provide the wireless signal directed into the trailer 102, for example, to allow a MHV 110 inside the trailer 102 to communicate with computing devices outside the trailer 102 that may be sending autonomous control instructions to the MHV 110.

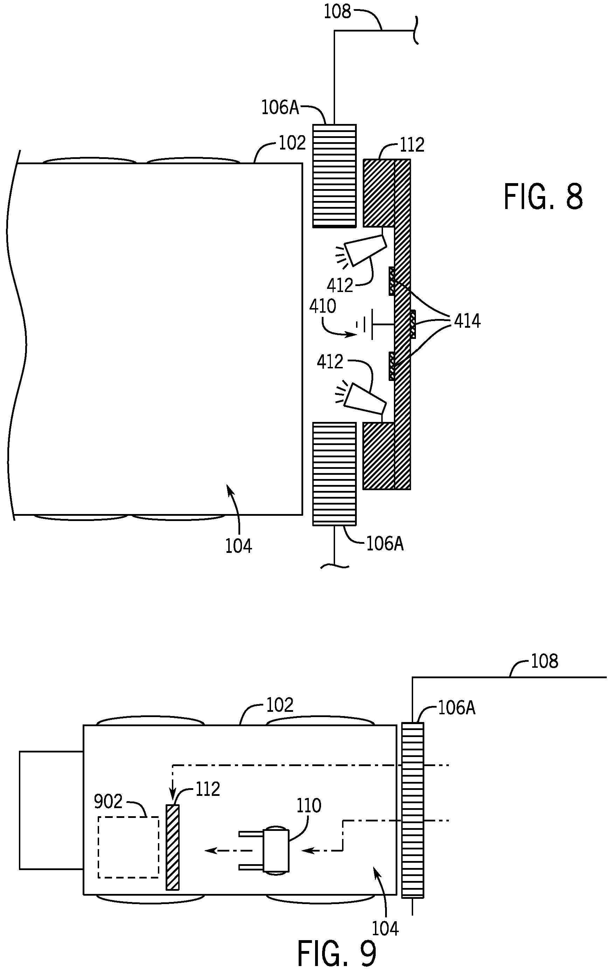

Fig. 8 is a top cross-section of an example navigation alignment system with a lighting system directed into a trailer, according to some aspects of the present disclosure. In some examples, the navigation alignment system 112 may utilize lights 412 to illuminate the inside compartment 104 of a trailer 102. In such examples, a MHV 110 may autonomously navigate into the trailer 102 with assistance of the navigation alignment system 112 as it illuminates the inside compartment of the trailer 102 by directing its lights 412 into the trailer. In some examples, a MHV 110 may utilize vision guidance to navigate through the trailer 102 and perform tasks within the inside compartment 104 of the trailer 102.

Fig. 9 is a top view of an example MHV 110 navigating within the inside compartment 104 of a trailer 102 with assistance of a navigation alignment system 112, according to some aspects of the present disclosure. In some examples, the MHV 110 may enter the inside compartment 104 of trailer 102 through trailer bay 106A. The navigation alignment system 112 may provide assistance for the MHV 110 when entering the trailer 102. In some examples, the navigation alignment system 112 may enter the trailer 102 to provide further assistance for the MHV 110 to reach a target destination 902 within the inside compartment 104 of the trailer 102. In an example, the navigation alignment system 112 may receive the target destination 902 for the MHV 110 and thus, may align itself with the target destination 902, as shown. The MHV 110 may thus navigate through the navigation alignment system 112 to reach the target destination 902. When the navigation alignment system 112 enters the inside compartment 104 of trailer 102 through trailer bay 106A, the navigation alignment system 112 might further provide directed lighting to light the MHV's path to the target destination and to light the target destination 902.

While described in various examples as assisting a MHV 110 when the MHV 110 is entering a trailer 102, it will be understood that the navigation alignment system 112 may additionally, or alternatively, be utilized to assist the MHV 110 in exiting the trailer 102. In an example, the MHV 110 may be at target destination 902 and may receive instructions to exit the trailer 102. The MHV 110 may detect the navigation alignment system 112 and navigate toward the navigation alignment system 112, which may be positioned proximate the trailer bay 106A to guide the MHV 110 to exit the trailer 102.

While various spatial and directional terms, such as top, bottom, lower, mid, lateral, horizontal, vertical, front, and the like may be used to describe examples of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

Various features and advantages of the disclosed technology are set forth in the following claims.

## Claims

1. A navigation alignment system (112) to assist in a navigation of a material handling vehicle, MHV, (110) as the MHV (110) is navigating relative to a navigation area, the navigation alignment system (112) **characterized in that** it is comprising:
a housing (116);
a navigation controller (118) coupled to the housing, the navigation controller (118) to wirelessly communicate with the MHV (110) by directional Wi-Fi;
a lighting system coupled to the housing (116), the lighting system including at least one directable light (412) to provide lighting to at least a portion of the navigation area;
at least one reflector (414) coupled to the housing, to provide a reflective surface for the MHV to detect and/or align relative to;
a communication system coupled to the housing, including at least one antenna, the communication system to provide the directional Wi-Fi to at least a portion of the navigation area via the at least one antenna (410); and
a set of rollers (406) coupled to the housing (116) for maneuvering the housing (116), the set of rollers (406) to allow navigation of the housing, :
wherein the navigation alignment system (112) includes at least one autonomous navigation sensor (408) to allow the housing (116) to navigate autonomously in relation to, into, out of, and/or within the navigation area.

2. The navigation alignment system (112) of claim 1, wherein the housing (116) is adjustable in any of height, width, or depth so as to achieve different shapes and sizes and/or wherein the housing (116) includes a first side portion, a second side portion, and a top portion that physically couples the first side portion to the second side portion.

3. The navigation alignment system (112) of claim 1, wherein the navigation controller (118) communicates directly and/or indirectly with any of at least one of the navigation alignment system (112), the material handling vehicle (110), a trailer (102), a trailer bay (106A), a warehouse management system, and/or any other device.

4. The navigation alignment system (112) of claim 3, wherein the navigation controller causes the navigation alignment system (112) or the housing (116) of the navigation alignment system (112) to autonomously maneuver into an alignment position with the trailer (102), turn on the lighting system, and turn on the communication system.

5. The navigation alignment system (112) of claim 1, wherein, in response to a notification that the material handling vehicle (110) is lost, the navigation alignment system (112) is further configured to at least one of direct the at least one directable light (412) towards the material handling vehicle (110), increase a brightness of the at least one directable light (412), or move to a new position.

6. The navigation alignment system (112) of claim 1, wherein the navigation alignment system (112) is a component of a dock bay door (106B).

7. The navigation alignment system (112) of claim 1, further comprising at least one imaging sensor (408), wherein the navigation controller (118) is configured to receive data from the at least one imaging sensor (408) and align the housing (116) of the navigation alignment system (112) to a navigation area based on the data received from the at least one imaging sensor (408).

8. A method for assisting in a navigation of a material handling vehicle, MHV, (110) in a navigation area, the method comprising:
determining a location of a navigation area;
**characterized in that** the method further comprises:
providing, based on the location of the navigation area, position coordinates to cause a navigation alignment system (112) to autonomously move to the navigation area; and
instructing the navigation alignment system (112) to provide lighting and a directional wireless signal to at least a portion of the navigation area
aligning the MHV (110) to the navigation alignment system prior to the MHV (110) navigating in the navigation area; and
causing the MHV (110) to navigate a path upon achieving an alignment with the navigation alignment system (112).

9. The method of claim 8, further comprising:
receiving a notification that the material handling vehicle (110) is lost within the navigation area; and
in response to the notification that the material handling vehicle (110) is lost, causing the navigation alignment system (112) to at least one of direct the lighting towards the material handling vehicle, increase a brightness of the lighting, or move to a new position.

10. The method of claim 8, further comprising:
detecting the material handling vehicle (110) as the material handling vehicle (110) passes the navigation alignment system (112); and
coordinating a path of the material handling vehicle (110) based on a detection of the material handling vehicle (110) as the material handling vehicle (110) passes the navigation alignment system (112).

## Patentansprüche

1. Navigationsausrichtungssystem (112) zur Unterstützung bei einer Navigation eines Materialtransportfahrzeugs, MHV, (110), während das MHV (110) relativ zu einem Navigationsbereich navigiert, wobei das Navigationsausrichtungssystem (112) **dadurch gekennzeichnet ist, dass** es umfasst:
ein Gehäuse (116);
eine Navigationssteuerung (118), die mit dem Gehäuse gekoppelt ist, wobei die Navigationssteuerung (118) durch gerichtetes Wi-Fi mit dem MHV (110) drahtlos kommuniziert;
ein Beleuchtungssystem, das mit dem Gehäuse (116) gekoppelt ist, wobei das Beleuchtungssystem mindestens ein richtbares Licht (412) beinhaltet, um eine Beleuchtung in Bezug auf mindestens einen Abschnitt des Navigationsbereichs bereitzustellen;
mindestens einen Reflektor (414), der mit dem Gehäuse gekoppelt ist, um eine reflektierende Oberfläche bereitzustellen, die das MHV erfasst und/oder in Bezug auf welche es sich ausrichtet;
ein Kommunikationssystem, das mit dem Gehäuse gekoppelt ist, das mindestens eine Antenne umfasst, wobei das Kommunikationssystem das gerichtete Wi-Fi für mindestens einen Abschnitt des Navigationsbereichs über die mindestens eine Antenne (410) bereitstellt; und
einen Satz von Rollen (406), die mit dem Gehäuse (116) gekoppelt sind, um das Gehäuse (116) zu manövrieren, wobei der Satz von Rollen (406) eine Navigation des Gehäuses ermöglicht, :
wobei das Navigationsausrichtungssystem (112) mindestens einen autonomen Navigationssensor (408) umfasst, um dem Gehäuse (116) die autonome Navigation in Bezug auf den Navigationsbereich, in diesen, aus diesem und/oder innerhalb dieses zu ermöglichen.

2. Navigationsausrichtungssystem (112) nach Anspruch 1, wobei das Gehäuse (116) in einem von Höhe, Breite oder Tiefe verstellbar ist, um verschiedene Formen und Größen zu erreichen, und/oder wobei das Gehäuse (116) einen ersten Seitenabschnitt, einen zweiten Seitenabschnitt und einen oberen Abschnitt umfasst, der den ersten Seitenabschnitt physisch mit dem zweiten Seitenabschnitt koppelt.

3. Navigationsausrichtungssystem (112) nach Anspruch 1, wobei die Navigationssteuerung (118) direkt und/oder indirekt mit einem beliebigen vom mindestens einem des Navigationsausrichtungssystems (112), des Materialtransportfahrzeugs (110), eines Anhängers (102), einer Anhängerbucht (106A), eines Lagerverwaltungssystems und/oder einer anderen Vorrichtung kommuniziert.

4. Navigationsausrichtungssystem (112) nach Anspruch 3, wobei die Navigationssteuerung das Navigationsausrichtungssystem (112) oder das Gehäuse (116) des Navigationsausrichtungssystems (112) dazu veranlasst, autonom in eine Ausrichtungsposition mit dem Anhänger (102) zu manövrieren, das Beleuchtungssystem einzuschalten und das Kommunikationssystem einzuschalten.

5. Navigationsausrichtungssystem (112) nach Anspruch 1, wobei als Reaktion auf eine Benachrichtigung, dass das Materialtransportfahrzeug (110) sich verfahren hat, das Navigationsausrichtungssystem (112) ferner zu mindestens einem von Richten der mindestens einen richtbaren Leuchte (412) auf das Materialtransportfahrzeug (110), Erhöhen einer Helligkeit der mindestens einen richtbaren Leuchte (412) oder Bewegen in eine neue Position konfiguriert ist.

6. Navigationsausrichtungssystem (112) nach Anspruch 1, wobei das Navigationsausrichtungssystem (112) eine Komponente einer Ladebuchttür (106B) ist.

7. Navigationsausrichtungssystem (112) nach Anspruch 1, ferner umfassend mindestens einen Abbildungssensor (408), wobei die Navigationssteuerung (118) so konfiguriert ist, dass sie Daten von dem mindestens einen Abbildungssensor (408) empfängt und das Gehäuse (116) des Navigationsausrichtungssystems (112) auf Basis der von dem mindestens einem Abbildungssensor (408) empfangenen Daten in Bezug auf einen Navigationsbereich ausrichtet.

8. Verfahren zum Unterstützen bei einer Navigation eines Materialtransportfahrzeugs, MHV, (110) in einem Navigationsbereich, wobei das Verfahren umfasst:
Bestimmen eines Standorts eines Navigationsbereichs;
**dadurch gekennzeichnet, dass** das Verfahren ferner umfasst:
Bereitstellen von Positionskoordinaten auf Basis des Standorts des Navigationsbereichs, um das Navigationsausrichtungssystem (112) dazu zu veranlassen, sich autonom zu dem Navigationsbereich zu bewegen; und
Anweisen des Navigationsausrichtungssystems (112), eine Beleuchtung und ein drahtloses Richtsignal in Bezug auf mindestens einen Abschnitt des Navigationsbereichs bereitzustellen
Ausrichten des MHV (110) auf das Navigationsausrichtungssystem, bevor das MHV (110) in dem Navigationsbereich navigiert; und
Veranlassen des MHV (110) dazu, entlang eines Wegs zu navigieren, wenn eine Ausrichtung mit dem Navigationsausrichtungssystem (112) erzielt ist.

9. Verfahren nach Anspruch 8, ferner umfassend:
Empfangen einer Benachrichtigung, dass das Materialtransportfahrzeug (110) sich innerhalb des Navigationsbereichs verfahren hat; und
als Reaktion auf die Benachrichtigung, dass das Materialtransportfahrzeug (110) sich verfahren hat, Veranlassen des Navigationsausrichtungssystems (112) zu mindestens einem von Richten der mindestens einen richtbaren Leuchte auf das Materialtransportfahrzeug, Erhöhen einer Helligkeit der mindestens einen richtbaren Leuchte oder Bewegen in eine neue Position.

10. Verfahren nach Anspruch 8, ferner umfassend:
Erfassen des Materialtransportfahrzeugs (110), während das Materialtransportfahrzeug (110) das Navigationsausrichtungssystem (112) passiert; und
Koordinieren eines Wegs des Materialtransportfahrzeugs (110) auf Basis eines Erfassens des Materialtransportfahrzeugs (110), während das Materialtransportfahrzeug (110) das Navigationsausrichtungssystem (112) passiert.

## Revendications

1. Système d'alignement de navigation (112) pour l'assistance à la navigation d'un véhicule de manipulation de matériau, MHV, (110) lorsque le MHV (110) navigue par rapport à une zone de navigation, le système d'alignement de navigation (112) **étant caractérisé en ce qu'**il comprend :
un boîtier (116) ;
un contrôleur de navigation (118) couplé au boîtier, le contrôleur de navigation (118) fonctionnant pour communiquer de manière sans fil avec le MHV (110) par Wi-Fi directionnel ;
un système d'éclairage couplé au boîtier (116), le système d'éclairage comprenant au moins une lumière orientable (412) pour fournir un éclairage à au moins une partie de la zone de navigation ;
au moins un réflecteur (414) couplé au boîtier, pour fournir une surface réfléchissante permettant au MHV de détecter et/ou de s'aligner par rapport à ;
un système de communication couplé au boîtier, comprenant au moins une antenne, le système de communication fonctionnant pour fournir un signal Wi-Fi directionnel à au moins une partie de la zone de navigation via l'au moins une antenne (410) ; et
un ensemble de rouleaux (406) couplés au boîtier (116) pour manœuvrer le boîtier (116), l'ensemble de rouleaux (406) permettant la navigation du boîtier, :
dans lequel le système d'alignement de navigation (112) comprend au moins un capteur de navigation autonome (408) pour permettre au boîtier (116) de naviguer de manière autonome par rapport à, dans, hors de et/ou à l'intérieur de la zone de navigation.

2. Système d'alignement de navigation (112) selon la revendication 1, dans lequel le boîtier (116) est réglable en hauteur, largeur ou profondeur afin d'obtenir différentes formes et tailles et/ou dans lequel le boîtier (116) comprend une première partie latérale, une deuxième partie latérale et une partie supérieure qui couple physiquement la première partie latérale à la deuxième partie latérale.

3. Système d'alignement de navigation (112) selon la revendication 1, dans lequel le contrôleur de navigation (118) communique directement et/ou indirectement avec l'un quelconque d'au moins un parmi le système d'alignement de navigation (112), le véhicule de manipulation de matériau (110), une remorque (102), un quai de remorque (106A), un système de gestion d'entrepôt et/ou tout autre dispositif.

4. Système d'alignement de navigation (112) selon la revendication 3, dans lequel le contrôleur de navigation amène le système d'alignement de navigation (112) ou le boîtier (116) du système d'alignement de navigation (112) à manœuvrer de manière autonome dans une position d'alignement avec la remorque (102), à allumer le système d'éclairage et à allumer le système de communication.

5. Système d'alignement de navigation (112) selon la revendication 1, dans lequel, en réponse à une notification indiquant que le véhicule de manipulation de matériau (110) est perdu, le système d'alignement de navigation (112) est en outre configuré pour au moins effectuer l'une des opération consistant à diriger l'au moins une lumière orientable (412) vers le véhicule de manipulation de matériau (110), augmenter la luminosité de l'au moins une lumière orientable (412) ou se déplacer vers une nouvelle position.

6. Système d'alignement de navigation (112) selon la revendication 1, dans lequel le système d'alignement de navigation (112) est un composant d'une porte de quai (106B).

7. Système d'alignement de navigation (112) selon la revendication 1, comprenant en outre au moins un capteur d'imagerie (408), dans lequel le contrôleur de navigation (118) est configuré pour recevoir des données en provenance de l'au moins un capteur d'imagerie (408) et aligner le boîtier (116) du système d'alignement de navigation (112) sur une zone de navigation en fonction des données reçues de l'au moins un capteur d'imagerie (408).

8. Procédé d'assistance à la navigation d'un véhicule de manipulation de matériau, MHV, (110) dans une zone de navigation, le procédé comprenant :
la détermination d'un emplacement d'une zone de navigation ;
**caractérisé en ce que** le procédé comprend en outre :
la fourniture, en fonction de l'emplacement de la zone de navigation, de coordonnées de position permettant à un système d'alignement de navigation (112) de se déplacer de manière autonome vers la zone de navigation ; et
la commande du système d'alignement de navigation (112) pour fournir un éclairage et un signal sans fil directionnel à au moins une partie de la zone de navigation
l'alignement du MHV (110) sur le système d'alignement de navigation avant que le MHV (110) ne navigue dans la zone de navigation ; et
la provocation du MHV (110) à naviguer sur un chemin une fois l'alignement avec le système d'alignement de navigation (112) atteint.

9. Procédé selon la revendication 8, comprenant en outre :
la réception d'une notification indiquant que le véhicule de manipulation de matériau (110) est perdu dans la zone de navigation ; et
en réponse à la notification que le véhicule de manipulation de matériau (110) est perdu, la provocation du système d'alignement de navigation (112) pour au moins effectuer l'une des opération consistant à diriger l'éclairage vers le véhicule de manipulation de matériau, augmenter la luminosité de l'éclairage ou se déplacer vers une nouvelle position.

10. Procédé selon la revendication 8, comprenant en outre :
la détection du véhicule de manipulation de matériau (110) lorsque le véhicule de manipulation de matériau (110) passe devant le système d'alignement de navigation (112) ; et
la coordination d'un chemin du véhicule de manipulation de matériau (110) sur la base d'une détection du véhicule de manipulation de matériau (110) lorsque le véhicule de manipulation de matériau (110) passe devant le système d'alignement de navigation (112).
